# EUROPEAN PATENT APPLICATION

(11) **EP 4 818 786 A1**
(43) Date of publication of application: **07.10.2026**
(21) Application number: 25167687.0
(22) Date of filing: 01.04.2025
(51) Int. Cl.: G02B 21/24, G02B 21/00, G02B 23/18, G02B 21/22

(54) **OPTICS CARRIER, VIEWING MODULE, OPTICAL IMAGING SYSTEM, APPARATUS FOR CONTROLLING AN OPTICAL IMAGING SYSTEM, METHOD AND COMPUTER PROGRAM**

(71) Applicant: Leica Instruments (Singapore) Pte Ltd., Singapore 618299 (SG)
(72) Inventor: KOK, Alvin, 618299 Singapore (SG); CHARLES, Romy, 618299 Singapore (SG); PAN, Jiahao, 618299 Singapore (SG); YE, Zhen, 618299 Singapore (SG); TAY, Kean Peng, 618299 Singapore (SG); ZENG, Zheng Dong, 618299 Singapore (SG); LECK, Kheng Swee, 618299 Singapore (SG); YANG, Gao, 618299 Singapore (SG); SCHUTZ, Marco, 618299 Singapore (SG); LOH, Vui Fah, 618299 Singapore (SG)
(74) Representative: 2SPL Patentanwälte PartG mbB

(57) **Abstract**

An optics carrier for a microscope system is provided. The optics carrier comprises a mount for holding an objective and a connecting element configured to detachably mechanically connect the optics carrier to a viewing module.

## Description

### Technical field

Examples relate to an optics carrier, a viewing module, an optical imaging system, an apparatus for controlling an optical imaging system, a method and a computer program.

### Background

Conventionally, surgical microscopes have been offered in two distinct configurations: a 2D (two-dimensional) setup featuring optical binoculars and an optional integrated 2D camera for documentation, or a 3D (three-dimensional) setup providing stereoscopic (e.g., heads-up) visualization on monitors or through a headset. In some instances, the 3D configuration may also include a set of optical binoculars for hybrid usage, combining both conventional optical and 3D views. The 2D configuration is familiar to surgeons accustomed to conventional optical viewing and tends to be more cost-effective. By contrast, the 3D configuration offers enhanced depth perception and ergonomic comfort but at a higher price and requires additional training.

In conventional practice, purchasers must select either a 2D or 3D surgical microscope at the time of acquisition. If their needs change - such as a desire to transition from 2D to 3D visualization - they have little choice but to purchase an entirely new microscope. This rigidity imposes significant financial and logistical burdens, particularly on institutions aiming to keep pace with evolving surgical visualization techniques. It also limits the widespread adoption of advanced visualization methods and diminishes the long-term value of a costly surgical microscope investment. Further, a slowed market adoption can be observed, as many surgeons accustomed to 2D systems resist the transition to more advanced, ergonomically beneficial 3D technology.

These limitations highlight the need for an improved downgrading or upgrading capability in microscope systems.

### Summary

It is a finding of the inventors that a modular surgical microscope design can transition between 2D and 3D configurations without requiring wholesale equipment replacement.

Examples provide an optics carrier for a microscope system. The optics carrier comprises a mount for holding an objective and a connecting element configured to detachably mechanically connect the optics carrier to a viewing module. The viewing module may, for instance, comprise a 2D image sensor, a 3D image system or binoculars. The viewing module may be a 2D or 3D integrated video camera module.

The modular optics carrier enables users to easily attach different viewing modules to the same optics carrier. This flexibility enables quick reconfiguration to suit various procedural needs or surgeon preferences.

Unlike conventional microscopes that are locked into either 2D or 3D setups, the modular design allows users to move from a 2D module to a 3D module (or vice versa) without investing in an entirely new system. This lowers overall costs and extends the lifespan of the equipment. A modular structure also means that individual components, such as the 2D or 3D camera module, can be serviced, upgraded, or replaced without taking the entire microscope out of operation. Downtime is thereby minimized.

Because institutions can purchase only the modules they currently need, they can defer or scale up their investment (e.g., moving from 2D to 3D) as budgets allow or as clinical requirements evolve. This helps spread costs and lowers financial barriers to adopting advanced technology. By using an optics carrier that supports different imaging modules, manufacturers and medical facilities are better positioned to adopt next-generation visualization technologies. As new modules become available, they can be integrated without obsoleting the entire system. Furthermore, hospitals and clinics can extend the useful life of their microscope systems by simply upgrading modules when necessary. This approach increases the long-term value of the equipment and reduces the total cost of ownership.

In an example, the optics carrier of further comprises an interface configured to receive light from the objective, wherein the connecting element is further configured to optically couple the interface with an interface of the viewing module. For example, the interface of the optics carrier may comprise an afocal lens configured to receive the light from the objective. The afocal concept makes the microscope system's focus plane insensitive to mounting height errors. This allows the system to be interchangeable without the need for readjustment.

In an example, the connecting element comprises at least one alignment element, e.g., an alignment pin. An alignment element helps ensure that the viewing module, for example, is consistently attached in the correct orientation. It also allows for easy detachment and reattachment of the module while preserving the original calibration settings. This increases efficiency when swapping modules or performing maintenance. With a defined alignment feature, connecting a new module becomes faster and more intuitive.

Examples provide a viewing module for a microscope system. The viewing module comprises a 2D image sensor, a 3D image system or binoculars. The viewing module further comprises a connecting element configured to detachably mechanically connect the viewing module to an optics carrier, such as the optics carrier as described herein. The connecting element may, for instance, match a connecting element of the optics carrier, enabling quick and secure attachment or removal of the viewing module. This modular design reduces setup time and simplifies transitions between different imaging modes. Multiple viewing modules - such as a 2D image sensor module and a 3D imaging system module - can be interchangeably connected to the same optics carrier.

In an example, the viewing module may comprise a 2D image sensor or a 3D image system. The viewing module further comprises binoculars. Thus, the viewing module may combine imaging capabilities and binoculars within one module. This enables hybrid usage, i.e., surgeons and staff can rapidly switch between direct optical viewing through binoculars and digital visualization (2D or 3D) without changing modules or reconfiguring the system. As some procedures might benefit from direct optical examination, while others require documented digital imaging, having both options in one module provides on-demand adaptability during surgery. The shift between binoculars or digital visualization can also depend on the preferred posture of the user or the nature of the procedure, potentially reducing strain and fatigue.

In an example, the viewing module further comprises second binoculars. The further second binoculars may be for an assistant. In this way, both the primary user (e.g., surgeon) and an assistant can view the surgical field simultaneously, facilitating teamwork and immediate feedback during procedures.

In an example, the viewing module may comprise a 2D image sensor or a 3D image system, and the viewing module may further comprise a second connecting element configured to detachably mechanically connect the viewing module to binoculars. By providing a second connecting element specifically for binoculars, the viewing module can be adapted to different use cases on the fly - allowing for straightforward addition or removal of binoculars without modifying the core imaging components.

In an example, the viewing module further comprises a switch configured to switch between a first operation mode in which light received from an objective is solely sent to the 2D image sensor or the 3D image system and a second operation mode in which the light is distributed among the 2D image sensor or the 3D image system and the binoculars. This refers to a hybrid or full digital use of the viewing module. Switching may be controlled by a knob, for instance.

The switch mechanism allows for on-demand adjustment of how light is distributed and increases the modularity even further. This empowers surgeons to quickly adapt to procedurespecific needs or personal preferences without complex menu navigation or hardware modifications. Some procedures may require optimal camera output, whereas others may need the tactile feedback of direct optical viewing. A switchable system accommodates both scenarios without needing separate equipment.

In an example, 60 to 80, e.g., 70, percent of the light is sent to the binoculars in the second mode. Allocating a majority of the light ensures the surgeon has a well-illuminated, highcontrast image when directly viewing through the binoculars. This reduces eye strain and improves visual clarity. The remaining light is still sufficient for a camera system for supporting documentation or real-time video output.

In an example, the viewing module further comprises a prism. The switch may be configured to modify a position of the prism when switching between the first and the second operation mode. This leads to a user-friendly operation and a seamless transition between modes. Modifying the prism's position enables a rapid and straightforward switch between digital-only operation and hybrid viewing, without requiring extensive mechanical or electronic changes.

Examples provide an optical imaging system. The optical imaging system comprises an optics carrier as described herein and a viewing module as described herein.

In an example, the viewing module of the optical imaging system comprises a 2D image sensor. The optical imaging system further comprises a second viewing module comprising a 3D image system. The connecting element of the optics carrier is further configured to interchangeably mechanically connect the optics carrier to either the viewing module or the second viewing module (e.g., via their matching connecting element).

A single optical imaging system can accommodate both a 2D image module and a separate 3D image module, allowing users to interchange viewing technologies without investing in a completely new system.

Examples provide an apparatus for controlling an optical imaging system, such as the optical imaging system as described herein. The apparatus comprises processing circuitry configured to obtain module data indicative of whether a 2D image sensor or a 3D image system is coupled to the optical imaging system and modify at least one of settings of the optical imaging system and a user interface of the optical imaging system based on the module data.

The apparatus automatically adjusts the software of the optical imaging system (e.g., display parameters) according to whether a 2D or 3D module is installed. This dynamic configuration detection eliminates the need for manual reconfiguration. By detecting the active module, the system's interface can present relevant options, controls, and features specific to 2D or 3D operation.

In an example, the processing circuitry is configured to, if the module data indicates that a 2D image sensor is coupled to the optical imaging system, modify the user interface to provide a control for an optical adjustment or documentation. The processing circuitry is configured to, if the module data indicates that a 3D image system is coupled to the optical imaging system, modify the user interface to provide a control for at least one of depth visualization, 3D overlay, and a heads-up display.

The Customizable user interface has standard controls for optical adjustments and documentation in case of 2D and advanced features such as depth visualization, 3D overlays, and heads-up display in case of 3D. As the 2D or 3D module is connected, the user interface is changed or updated to seamlessly incorporate adapted functionalities. This context-specific tailoring of the interface to the active module decreases clutter and confusion, giving users immediate access to the most relevant controls and features.

In an example, the processing circuitry is configured to generate a user interface to provide a scene file, a surgical workflow, media playback and recording. Thus, the apparatus provides cross-compatible functionality as the scene files, surgical workflows and recording options are supported in both modes, 2D and 3D mode.

Examples provide a method for an optical imaging system. The method comprises obtaining module data indicative of whether a 2D image sensor or a 3D image sensor is coupled to the optical imaging system and modifying at least one of settings of the optical imaging system and a user interface of the optical imaging system based on the module data.

Examples further relate to a computer program having a program code for performing the method described above, when the computer program is executed on a computer, a processor, or a programmable hardware component.

### Short description of the Figures

Some examples of apparatuses and/or methods will be described in the following by way of example only, and with reference to the accompanying figures, in which
Fig. 1a and Fig. 1b show examples of a system of viewing modules and a shared optics carrier;
Fig. 2a and Fig. 2b show an example of a first and an example of a second operation mode, respectively, of optical paths in a viewing module;
Fig. 3 shows an example of a prism for switching operation modes in a viewing module;
Fig. 4a and Fig. 4b show an example of optical paths of an imaging system for a 2D and a 3D configuration, respectively;
Fig. 5a and Fig. 5b show two oblique views of an example of an optical imaging system;
Fig. 6 shows an example of an apparatus for controlling an imaging system;
Fig. 7 shows an example of a method for controlling an imaging system;
Fig. 8 shows an example of a surgical microscope system; and
Fig. 9 shows an example of a system including a microscope and a computer system.

### Detailed Description

As used herein the term "and/or" includes any and all combinations of one or more of the associated listed items and may be abbreviated as *"*/*'.*

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Various examples will now be described more fully with reference to the accompanying drawings in which some examples are illustrated. In the figures, the thicknesses of lines, layers and/or regions may be exaggerated for clarity.

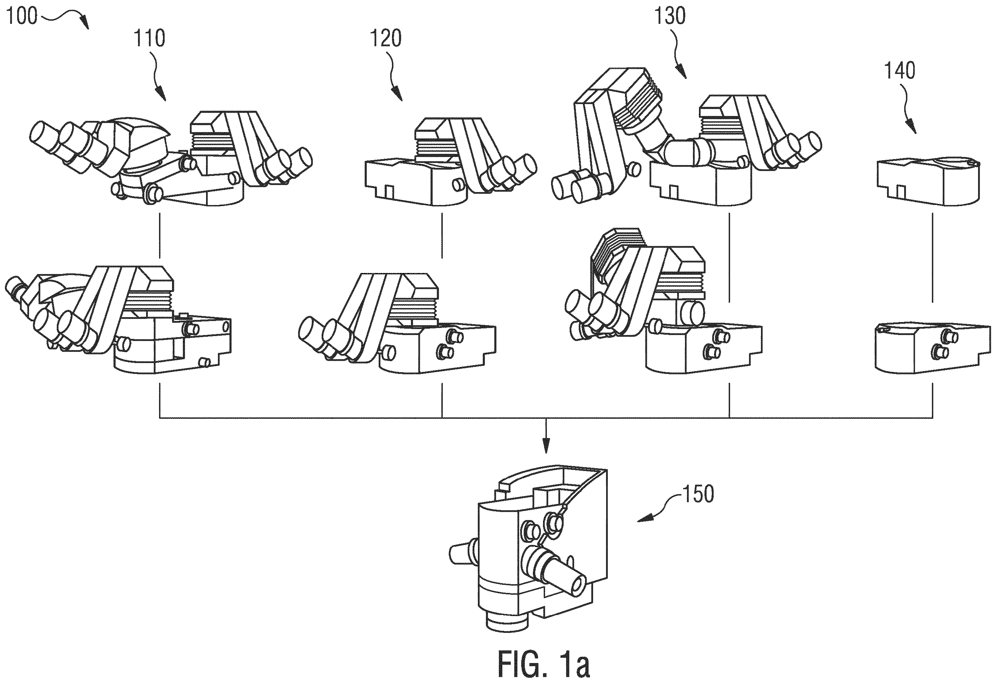

Fig. 1a shows an example of a system 100 comprising viewing modules 110 to 140 and an optics carrier 150 for a microscope system. Fig. 1a shows the viewing modules 110 to 140 from two different viewing perspectives (above and below). The system 100 may be for integration into or attachment to the microscope system. The microscope system may be a surgical microscope system.

The four viewing modules 110 to 140 have different hardware configurations: The viewing module 110 comprises a 2D image sensor (not visible in Fig. 1a as it is integrated within viewing module 110) and two pairs of binoculars; the viewing module 120 comprises a 3D image system (not visible in Fig. 1a as it is integrated) and one pair of binoculars; the viewing module 130 comprises a 3D image system and two pairs of binoculars; and the viewing module 120 comprises a 3D image system and no binoculars. The double usage of binoculars and imaging systems may be realized by beam splitters integrated into the viewing modules.

Fig. 1a illustrates the variety of modules that can interface with the optics carrier 150. However, a viewing module as described here is not limited to the specific configurations or designs depicted in Fig. 1a and may encompass other configurations or other designs. Generally, it may include a 2D image sensor, a 3D image (or imaging) system, or binoculars, or any combination of two or more of the latter.

A 2D (two-dimensional) image sensor is a camera or imaging component that captures a flat (single-plane) visual representation of a scene. It records light intensity on a single sensor array, generating standard photographic or video images without depth perception. A 3D (three-dimensional) imaging system captures depth information in addition to width and height. It may use stereoscopic optics, multiple sensors, or specialized technology to produce a view or recording with enhanced spatial awareness and depth cues. Binoculars provide a direct, stereoscopic optical view for the user's eyes. They consist of two parallel optical pathways (telescopes), one for each eye, giving a perception of depth and a magnified view of the observed scene.

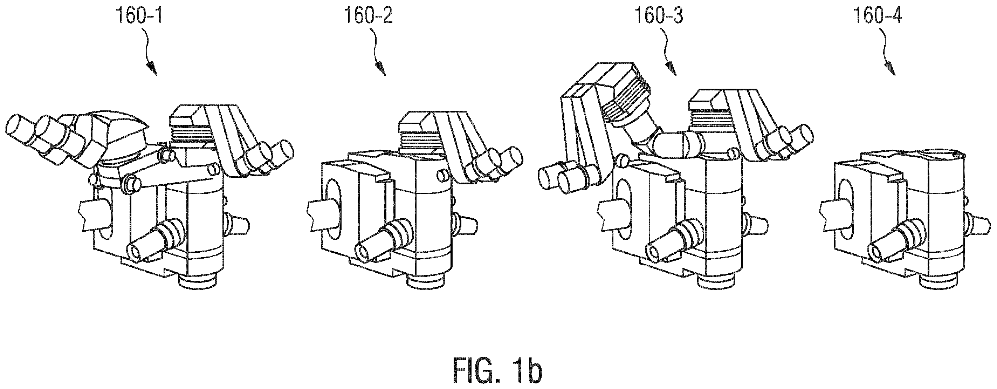

For compatibility with the optics carrier 150, each of the viewing modules 110 to 140 comprises a respective connecting element (not visible in Fig. 1) configured to detachably mechanically connect the respective viewing module to (a connecting element of) the optics carrier 150. In this way, the viewing modules 110 to 140 can interchangeably mechanically connect to the optics carrier 150. For example, the optics carrier 150 may exclusively be connected to one of the viewing modules 110 to 140 via a pair of matching connecting elements.

The connecting element is the mechanical interface or coupling mechanism that enables one of the viewing modules 110 to 140 and the optics carrier 150 to be securely and detachably joined. It optionally ensures proper alignment of optical and mechanical components.

Examples of a connecting element include bayonet mount, threaded connector, a latch or clamp mechanism, magnetic coupling or alike.

The connecting element may, in one example, comprise an alignment pin matching an alignment slot. This is a system where one part, e.g., the viewing module, has a protruding pin that fits into a corresponding slot on the other part, e.g., the optics carrier 150. This ensures correct orientation and also alignment of the optical paths.

For finer modularity, one or two pairs of binoculars may be detachable, too. For example, one or more of the viewing modules 110 to 140 may comprise a second connecting element configured to detachably mechanically connect the viewing module to (matching connecting elements of) binoculars.

An example of a composed state of the system 100 of Fig. 1a is illustrated by Fig. 1b. The composed systems 160-1 to 160-4 correspond to the optics carrier 150 connected to viewing modules 110 to 140, respectively.

An alternative or additional way to enhance modularity is a switching mechanism. For configurations in which the viewing module has binoculars and additional 2D or 3D imaging capability, such as viewing modules 110 to 130, a switch between hybrid or full digital use of the viewing module may be implemented. For instance, the viewing module may further comprise a switch configured to switch between a first operation mode in which light received from an objective is solely sent to the 2D image sensor or the 3D image system (depending on which one is implemented) and a second operation mode in which the light is distributed among the 2D image sensor or the 3D image system and the binoculars. For example, 60 to 80, e.g., 70, percent of the light may be sent to the binoculars in the second mode. The remaining light may be sent to the imaging system.

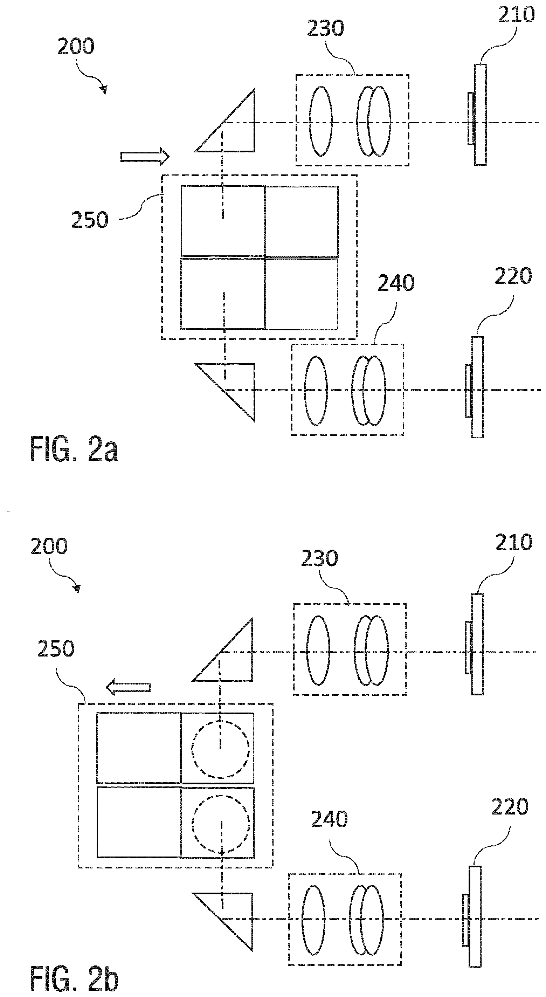

The switching capability may be realized by a prism. The switch may be configured to modify a position of the prism when switching between the first and the second operation mode. This is illustrated by Fig. 2a and Fig. 2b.

Fig. 2a and Fig. 2b show an example of a viewing module 200 in a first operation mode and a second operation mode, respectively. The viewing module 200 includes a 3D imaging system with a first and a second image sensor 210, 220, each capturing a distinct perspective of the microscopic scene that passes through respective first and second video channels (tubes) 230, 240. The viewing module 200 further comprises binoculars which are not shown in Fig. 2a and Fig. 2b.

Via a switcher prism group 250, the viewing module 200 can be switched between the first operation mode in which light received from an objective is solely sent to the 3D image system and the second operation mode in which the light is distributed among the 3D image system and the binoculars. The switching can be realized by changing the position of the prism group 250 relative to the optical paths each being coupled to one of the channels 230, 240. In Fig. 2a, the prism group 250 is positioned such that the optical paths impinge on the left part of the prism group 250, whereas in Fig. 2b, the prism group 250 is positioned such that the optical paths impinge on its right part.

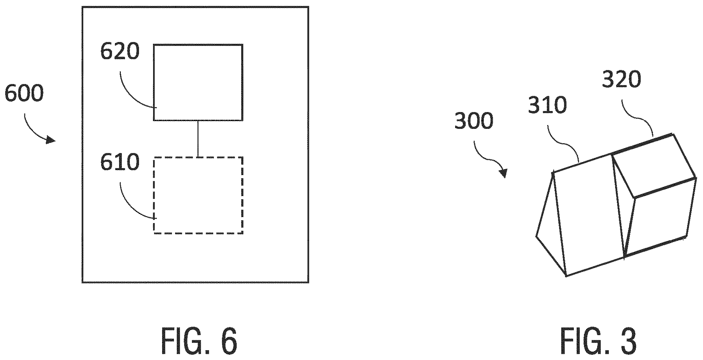

An example of such a prism group 250 is illustrated by Fig. 3. Fig. 3 shows a diagram depicting a switcher prism group 300. The switcher prism group 300 has two different parts 310, 320 used for adjusting how incoming light is split between two output paths (e.g., one for a video camera and one for direct optical viewing).

The prism assembly 300 can be positioned, shifted or rotated so that the first part 310 is in the optical path. This is a first operation mode (100:0 Mode) where substantially all (100%) of the light is directed to the video path and none (0%) to the visual path.

The prism assembly 300 can be positioned, shifted or rotated so that the second part 320 is in the optical path. This is a second operation mode (30:70 Mode) where approximately 30% of the light is routed to the video camera while 70% is routed to the optical/visual path (such as binoculars).

This prism 300 allows users to toggle how much light each channel receives, enabling either a fully digital mode (100% to video) or a hybrid mode (light shared between video and direct viewing).

Referring back to Fig. 1a and Fig. 1b, the optics carrier 150 comprises a mount for holding an objective and a connecting element configured to detachably mechanically connect the optics carrier 150 to one of the viewing modules 110 to 140. The optics carrier 150 is a mechanical and/or optical structure that supports and aligns the primary optical components of the microscope, such as the objective and optionally further lens systems.

In the optics carrier 150, an additional interface may optionally be integrated to receive light from the objective and guide it to the coupled viewing module (one of viewing modules 110 to 140). This interface operates in conjunction with the connecting element, ensuring that when the viewing module is mechanically attached, a proper optical path is also maintained. That is, the interface is configured to receive light from the objective, and the connecting element is further configured to optically couple the interface with an interface of the viewing module.

For improved modularity, the interface may include an afocal lens, which is designed to accept the converging or diverging light bundle from the microscope's objective and convert it into a collimated beam (or vice versa). By producing this substantially collimated output, the afocal lens simplifies alignment and helps preserve image fidelity. The connecting element then secures the viewing module in a manner that maintains this optical pathway, allowing the viewing modules 110 to 140 to be interchangeable and to receive the light accurately and consistently from the optics carrier 150.

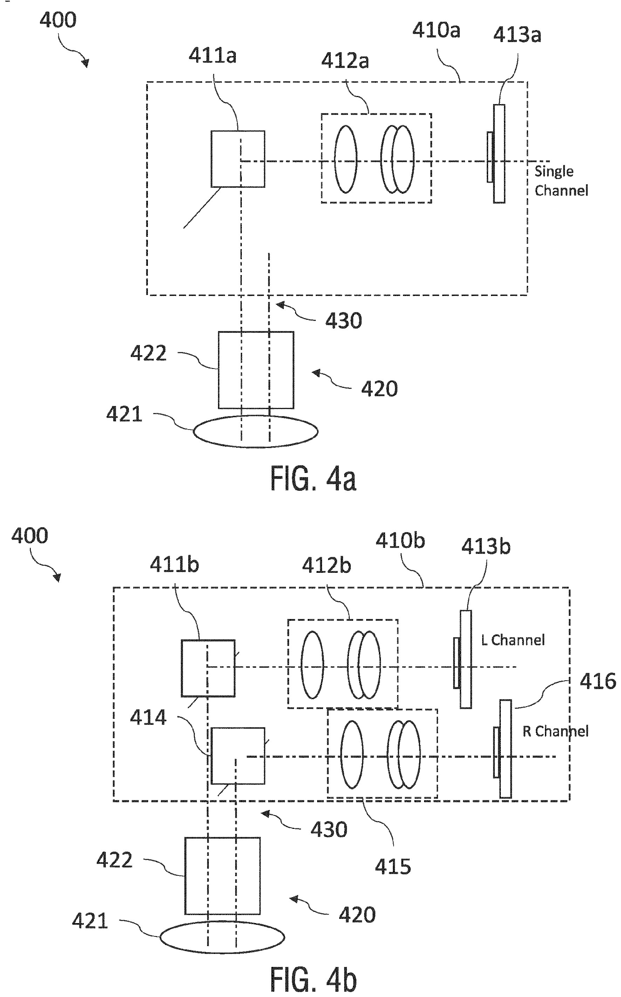

An example of an implementation of such an interface is illustrated by Fig. 4a and Fig. 4b.

Fig. 4a shows an example of a system 400 with a 2D configuration, while Fig. 4b shows an example of a system 400 with a 3D configuration. Both share the same optics carrier 420, which mates with a viewing module 410a and 410b, respectively, via an interface 430.

The optics carrier 420 comprises an objective 421 which gathers light from the specimen. A lens assembly 422 further conditions or relays the light toward the interface 430. The lens assembly 422 may provide a zoom, for instance. The outgoing light beam travels through the interface 430 to the viewing module 410a or 410b. The interface 430 may comprise an afocal lens.

The viewing module 410a (2D Configuration) includes a beamsplitter 411a redirecting or partially reflecting the incoming light along a single optical axis (single channel). One or more relay lenses 412a focus or magnify the image. An image sensor 413a captures the final 2D image.

In viewing module 410b (3D Configuration), the incoming light again first encounters a beamsplitter 411a. A secondary splitting element 414 creates two distinct optical paths, each corresponding to a left (L) and right (R) stereoscopic channel. Separate lens groups 412b, 415 process each channel independently. Two separate image sensors 413b, 416 record the left and right channels respectively, enabling stereoscopic (3D) imaging.

In both cases, the interface 430 ensures improved alignment and optical coupling between the optics carrier 420 and the viewing module 410a or 410b, allowing a single microscope base to support either a 2D or 3D imaging setup simply by swapping or reconfiguring the viewing module.

While conventional optical imaging systems are exclusively tailored to either 2D or 3D with minimal or no cross-compatibility, the optical imaging system as described herein, such as system 100 or 400, can accommodate multiple viewing modules such as a 2D image module and a separate 3D image module, allowing users to interchange viewing technologies without investing in a completely new system.

The proposed viewing module, optics carrier and system have a modular design, e.g., for surgical microscopes that enables seamless switching between 2D and 3D configurations. This allows customers to begin with a basic 2D setup at a lower cost and later upgrade to a 3D configuration by simply swapping modular components, thereby eliminating the need to replace the entire microscope. Conversely, the design also permits downgrading from 3D to 2D when necessary due to budget constraints or surgeon preference.

The optical system is engineered to support both imaging modes by incorporating shared optical elements such as prisms and beam splitters, which facilitate the integration of either a 2D camera or a 3D stereoscopic camera without disrupting the core optical alignment. High image quality and resolution are maintained in both configurations, with the system optimized for specific workflows by adjusting depth of field and brightness as required.

From a hardware perspective, the system comprises interchangeable modules. The 2D module includes a 2D camera and traditional optical binoculars for direct visualization, while the 3D module incorporates a stereoscopic camera for 3D heads-up visualization along with an optional optical binocular attachment for legacy use. Mechanical interfaces have been designed with a plug-and-play mechanism that allows easy swapping of modules while ensuring stable alignment and compatibility with existing microscope arms and mounts. Common connectors and power supply units further support both modules, reducing system complexity.

On the software side, dynamic configuration detection is employed; the processing circuitry automatically identifies which module is installed and adjusts the system settings and user interface accordingly. For a 2D configuration, the user interface provides controls for optical adjustments and documentation, whereas for a 3D configuration it offers advanced features such as depth visualization, 3D overlays, and heads-up display controls. In addition, scene files, surgical workflows, and recording options are supported in both modes, ensuring cross-compatible functionality.

Workflow optimization is achieved through clearly defined upgrade and downgrade paths. Customers can purchase a basic 2D system and later upgrade to 3D functionality by installing the corresponding module, or revert to 2D by reinstalling the original module, thereby preserving the investment in the core system. The system is designed for ease of use, eliminating the need for additional calibration procedures for optical components or camera sensors, and the modular components are engineered for straightforward maintenance and replacement, which minimizes downtime.

Novel features of the proposed optical imaging system include a modular optical path, hardware, and software that allow seamless transitions between 2D and 3D configurations, interchangeable components with plug-and-play compatibility, and adaptive software that optimizes system performance based on the installed module. These innovations extend the product lifecycle by providing flexible upgrade and downgrade capabilities, offering customers cost efficiency, flexibility to meet diverse surgical preferences and workflows, futureproofing through gradual adoption of advanced 3D technologies, and an extended return on investment by prolonging the system's useful life.

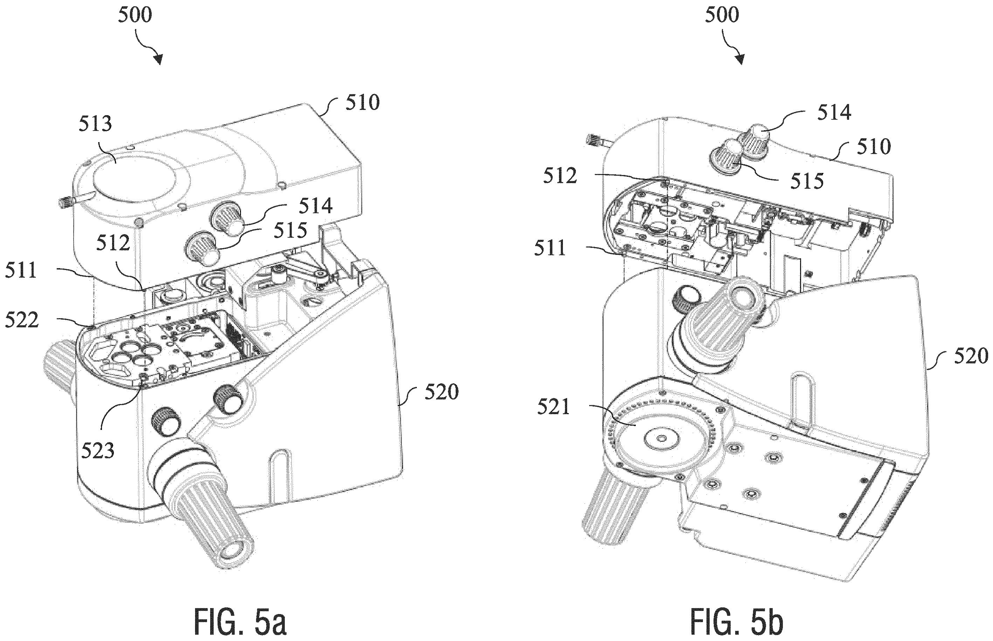

Fig. 5a and Fig. 5b illustrate two different oblique views (from above and from below, respectively) of an exploded representation of an example of an optical imaging system 500. The optical imaging system 500 comprises a viewing module 510 and an optics carrier 520. The objective 521 is mounted at the front of the optics carrier 520 to gather light from the surgical field or specimen.

Two alignment pins 511, 512 on the viewing module 510 are designed to fit into corresponding alignment slots 522, 523 on the optics carrier 520, ensuring correct positioning and stable attachment. This avoids additional calibration when changing modules. An interface of the optics carrier 520 (i.e., its contour, the connecting elements, and the optical handover) is configured to optically and mechanically match viewing module 510 and further viewing modules with different configurations, as described with reference to Fig. 1a and Fig. 1b.

Knobs 514, 515 located on the viewing module 510 allow adjustment of a prism assembly (not shown), which controls how light is split between different imaging paths or viewing options. A removable cap 513 sits at the top of the viewing module 510, where binoculars can be attached if desired, providing the user with a direct optical viewing capability in addition to any digital imaging functions.

Fig. 6 illustrates a block diagram of an apparatus 600 for controlling an optical imaging system, as described herein, such as system 100 or 400. The apparatus 600 may be integrated into the optical imaging system or may be partially or fully external to the optical imaging system. If not fully integrated, the apparatus 600 may be communicatively coupled to the optical imaging system via an interface 610 for data exchange.

The apparatus 600 comprises processing circuitry 620 configured to obtain module data indicative of whether a 2D image sensor or a 3D image sensor system is coupled to the optical imaging system. Thus, the processing circuitry 620 can automatically determine which type of imaging module, 2D or 3D, is attached to the optical imaging system.

This can be achieved by, e.g., a module identification: For instance, each viewing module (2D or 3D) may incorporate a small memory device or electronic ID chip. When the module is connected, the processing circuitry 620 queries this chip to read its identifier (encoded in module data), thereby learning whether it is a 2D or 3D module. Alternatively, the processing circuitry 620 can also infer the module type by checking the number of video outputs or sensor signals available (encoded in the module data). A single output typically indicates a 2D camera, whereas dual outputs suggest a stereoscopic (3D) system.

The processing circuitry 620 is further configured to modify at least one of settings of the optical imaging system and a user interface of the optical imaging system based on the module data. For example, the processing circuitry 620 may be configured to, if the module data indicates that a 2D image sensor is coupled to the optical imaging system, modify the user interface to provide a control for an optical adjustment or documentation and, if the module data indicates that a 3D image system is coupled to the optical imaging system, modify the user interface to provide a control for at least one of depth visualization, 3D overlay, and a heads-up display.

This means that the processing circuitry 620 automatically adapts the system's configuration and user interface based on which imaging module is connected. The processing circuitry 620 first detects whether a 2D image sensor or a 3D imaging system is connected through the module data. Based on the detected module type, the processing circuitry 620 then modifies certain system settings. For example, it might adjust optical parameters or other imaging adjustments that are optimal for the connected module. In addition to system settings, the circuitry 620 also changes the controls presented in the user interface: For a 2D Module, the interface is modified to include controls for optical adjustments (like zoom or focus) and options for documentation (capturing still images or videos) that are relevant to a 2D imaging setup. For a 3D Module, the interface offers controls specific to 3D imaging, such as depth visualization adjustments, 3D overlay options, and a heads-up display feature, which are important for effectively using a stereoscopic imaging system.

Depth visualization adjustments are controls that fine-tune how the stereoscopic system renders depth cues. By adjusting parameters like image disparity or parallax, the user can optimize the perception of depth, ensuring that the 3D image accurately reflects the spatial relationships within the microscopic scene. 3D overlay options enable the system to superimpose additional information, such as annotations, measurements, or preoperative data, directly onto the 3D image. These overlays help provide context and guidance, enhancing the surgeon's ability to interpret complex anatomical structures during a procedure. A heads-up display (HUD) projects critical information into the user's field of view without requiring them to look away from the operative scene. In a stereoscopic imaging system, a HUD can present real-time data, surgical metrics, or navigation cues directly within the 3D view, allowing the surgeon to maintain focus while accessing essential insights.

Optionally, the processing circuitry 620 may generate a user interface to provide a scene file, a surgical workflow, media playback and recording. These may be features shared by the 2D and 3D configuration.

A scene file is a stored configuration or snapshot that captures the current visual state of the imaging system along with its associated settings. It can serve as a reference for comparing past and present images, assist in documenting surgical procedures, or help in restoring a specific configuration. A surgical workflow refers to the sequence of steps or tasks that guide the surgical procedure. Integrated into the user interface, a surgical workflow may include prompts, checklists, or step-by-step guides that help ensure each stage of the surgery is performed consistently and efficiently. Media playback is the ability to review previously recorded images or video directly through the system's interface. Recording refers to the process of capturing live video or still images during a surgical procedure. This function is essential for documentation, post-operative review, educational purposes, or for medico-legal records. Both 2D and 3D configurations can support recording, ensuring that detailed visual data is available regardless of the imaging mode used.

While conventional software provides user interfaces, features, and functions that are built for a single viewing mode, offering no support for switching between 2D and 3D, the apparatus 600 provides automatic adaptation and shared functionality.

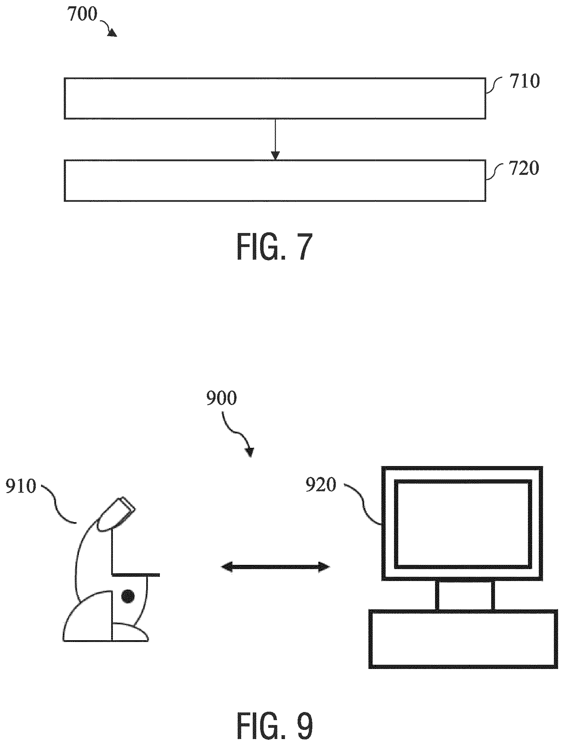

Fig. 7 illustrates a flow chart of an example of a method 700 for an optical imaging system.

The method 700 may be computer-implemented. The method 700 comprises obtaining 710 module data indicative of whether a 2D image sensor or a 3D image system is coupled to the optical imaging system and modifying 720 at least one of settings of the optical imaging system and a user interface of the optical imaging system based on the module data. Further details of the method 700 are explained in connection with the apparatus as described herein, such as apparatus 600.

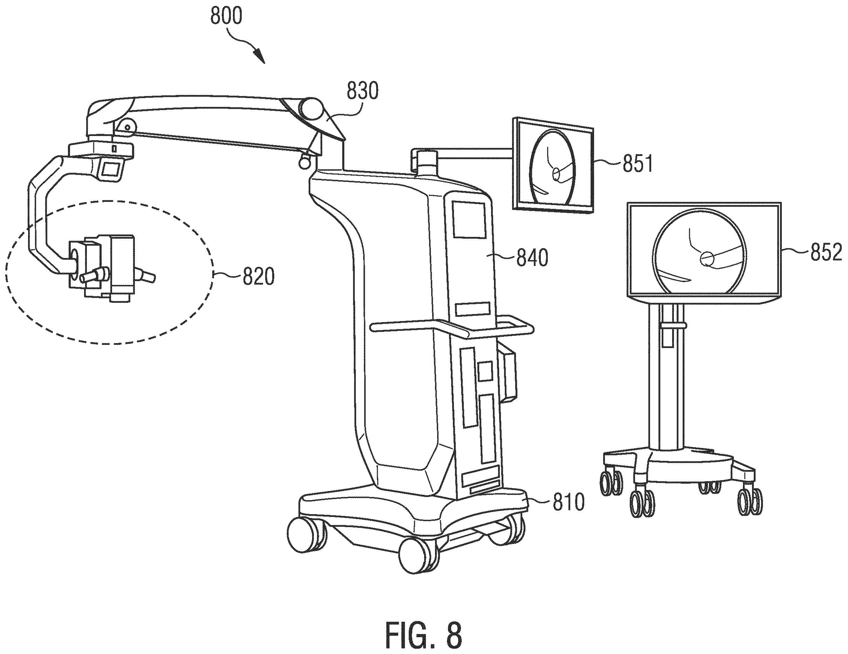

Fig. 8 illustrates an example of a mobile surgical microscope system 800 on a wheeled base 810. The surgical microscope system 800 comprises a modular optical imaging system 820 as described herein, such as system 100. The optical imaging system 820 may include a microscope head. The microscope system 800 includes an overhead arm 830 supporting the optical imaging system 820. This setup is designed for operating room use, where the arm positions the microscope head above the surgical field.

The optical imaging system 820 includes integrated optics and can be connected to an integrated computing system 840. Additionally, the microscope system 800 includes an integrated display 851 and an external display 852, shown here on a separate stand. These monitors present a live or processed view of the surgical site, allowing the surgeon and assistants to observe or document the procedure in real time.

Some embodiments relate to a microscope comprising an apparatus as described herein, such as apparatus 600. Alternatively, a microscope may be part of or connected to such an apparatus. Fig. 9 shows a schematic illustration of a system 900, e.g., an optical imaging system, configured to perform a method described herein, e.g., with reference to Fig. 7. The system 900 comprises a microscope 910 and a computer system 920. The microscope may comprise the apparatus as described above. The microscope 910 is configured to take images and is connected to the computer system 920. The computer system 920 is configured to execute at least a part of a method described herein. The computer system 920 may be configured to execute a machine learning algorithm. The computer system 920 and microscope 910 may be separate entities but can also be integrated together into one common housing. The computer system 920 may be part of a central processing system of the microscope 910 and/or the computer system 920 may be part of a subcomponent of the microscope 910, such as a sensor, an actor, a camera or an illumination unit, etc. of the microscope 910.

The computer system 920 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 920 may comprise any circuit or combination of circuits. In one embodiment, the computer system 920 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 920 may be a custom circuit, an application-specific integrated circuit (ASlC), or the like, such as, for example, one or more circuits (such as a communication circuit) for use in wireless devices like mobile telephones, tablet computers, laptop computers, two-way radios, and similar electronic systems. The computer system 920 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 920 may also include a display device, one or more speakers, and a keyboard and/or controller, which can include a mouse, trackball, touch screen, voice-recognition device, or any other device that permits a system user to input information into and receive information from the computer system 920.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a nontransitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 system
110 to 140 viewing modules
150 optics carrier
160-1 to 160-4 composed systems
200 viewing module
210, 220 image sensors
230, 240 video channels
250 prism group
300 prim group
310 first part
320 second part
400 system
410 viewing module
411a, 411b, 414 beam splitter
412a, 412b, 415 video channels
413a, 413b, 416 image sensors
420 optics carrier
421 objective
422 zoom lenses
430 interface
500 optical imaging system
510 viewing module
511, 512 alignment pins
513 cap
514, 515 knobs
520 optics carrier
521 objective
522, 523 alignment slots
600 apparatus
610 interface
620 processing circuitry
700 method
710 obtaining
720 modifying
800 microscope system
810 base
820 imaging system
830 arm
840 computing system
851, 852 displays
900 imaging system
910 microscope
920 computing system

## Claims

1. An optics carrier (150) for a microscope system, comprising:
a mount for holding an objective (421); and
a connecting element configured to detachably mechanically connect the optics carrier (150) to a viewing module (110-140).

2. The optics carrier (150) of claim 1, further comprising:
an interface (430) configured to receive light from the objective (421), wherein the connecting element is further configured to optically couple the interface (430) with an interface of the viewing module.

3. The optics carrier (150) of claim 2, wherein
the interface (430) comprises an afocal lens configured to receive the light from the objective (421).

4. The optics carrier (150) of any one of the previous claims, wherein
the connecting element comprises at least one alignment element.

5. A viewing module (110-140) for a microscope system, comprising:
a 2D image sensor, a 3D image system or binoculars; and
a connecting element configured to detachably mechanically connect the viewing module (110-140) to an optics carrier (150).

6. The viewing module (110-140) of claim 5, wherein
the viewing module (110-140) comprises a 2D image sensor or a 3D image system, and wherein the viewing module (110-140) further comprises binoculars.

7. The viewing module (110-140) of claim 6, wherein
the viewing module (110-140) further comprises second binoculars.

8. The viewing module (110-140) of any one of claims 5 to 7, wherein
the viewing module (110-140) comprises a 2D image sensor or a 3D image system, and wherein the viewing module (110-140) further comprises a second connecting element configured to detachably mechanically connect the viewing module (110-140) to binoculars.

9. The viewing module (110-140) of any one of claims 6 to 8, further comprising
a switch configured to switch between a first operation mode in which light received from an objective is solely sent to the 2D image sensor or the 3D image system and a second operation mode in which the light is distributed among the 2D image sensor or the 3D image system and the binoculars.

10. The viewing module (110-140) of claim 9, further comprising
a prism (300), wherein the switch is configured to modify a position of the prism (300) when switching between the first and the second operation mode.

11. An optical imaging system (100), comprising:
an optics carrier (150) of any one of claims 1 to 4; and
a viewing module (110-140) of any one of claims 5 to 10.

12. The optical imaging system (100) of claim 11, wherein
the viewing module (110) comprises a 2D image sensor, wherein the optical imaging system (100) further comprises a second viewing module (120-140) comprising a 3D image system, and wherein the connecting element of the optics carrier (150) is further configured to interchangeably mechanically connect the optics carrier (150) to either the viewing module (110) or the second viewing module (120-140).

13. An apparatus (600) for controlling an optical imaging system, comprising processing circuitry (620) configured to:
obtain module data indicative of whether a 2D image sensor or a 3D image system is coupled to the optical imaging system; and
modify at least one of settings of the optical imaging system and a user interface of the optical imaging system based on the module data.

14. The apparatus (600) of claim 13, wherein the processing circuitry (620) is configured to:
if the module data indicates that a 2D image sensor is coupled to the optical imaging system, modify the user interface to provide a control for an optical adjustment or documentation; and
if the module data indicates that a 3D image system is coupled to the optical imaging system, modify the user interface to provide a control for at least one of depth visualization, 3D overlay, and a heads-up display.

15. A method (700) for an optical imaging system, comprising:
obtaining (710) module data indicative of whether a 2D image sensor or a 3D image system is coupled to the optical imaging system; and
modifying (720) at least one of settings of the optical imaging system and a user interface of the optical imaging system based on the module data.
